# EUROPEAN PATENT APPLICATION

(11) **EP 4 770 016 A1**
(43) Date of publication of application: **01.07.2026**
(21) Application number: 25809940.7
(22) Date of filing: 11.04.2025
(51) Int. Cl.: H04L 12/10, H02J 7/00, H04L 43/0811, H04L 41/0663, B60R 16/023, H04L 12/40

(54) **POWER CONTROL DEVICE AND METHOD THEREOF**

(30) Priority: 10.05.2024 KR 20240061774; 24.10.2024 KR 20240146468
(71) Applicant: LG ENERGY SOLUTION, LTD., Seoul 07335 (KR)
(72) Inventor: LEE, Ye Seul, Yuseong-gu, Daejeon 34122 (KR); YANG, Seong Yeol, Yuseong-gu, Daejeon 34122 (KR); JUNG, Jae Sang, Yuseong-gu, Daejeon 34122 (KR)
(74) Representative: Plasseraud IP
(86) International application number: PCT/KR2025/004927
(87) International publication number: WO 2025/234627

(57) **Abstract**

A power control device according to an embodiment of this document includes a power control unit electrically connected to a battery and related to power supply, at least one area control unit electrically connected to the power control unit, and an end device electrically connected to the electric power control unit, in which the power control unit is configured to receive first power from the battery, transmit second power that is at least a part of the received first power to at least one of the end device, the at least one area control unit, or any combination thereof, and operate the end device based on the second power.

## Description

### TECHNICAL FIELD

### Cross-reference to Related Applications

This application claims priority from Korean Patent Application Nos. 10- 2024-0061774, filed on May 10, 2024, and 10-2024-0146468, filed on October 24, 2024, the disclosures of which are incorporated by reference herein.

### Technical Field

Embodiments disclosed in this document relate to a power control device and method thereof.

### BACKGROUND ART

As electric vehicles powered by electricity become widespread, research and development on new vehicle architectures are actively being conducted. For example, the electric vehicle may be powered by secondary batteries. Here, secondary batteries are batteries that can be charged and discharged, and may be interpreted including both conventional Ni/Cd batteries, Ni/MH batteries, and recent lithium ion batteries. Among secondary batteries, lithium ion batteries have the advantage of having much higher energy density than conventional Ni/Cd batteries and Ni/MH batteries, etc. In addition, lithium ion batteries may be manufactured to be small and lightweight, and thus lithium ion batteries are used as power sources for mobile devices. Recently, the scope of use of the lithium ion batteries has expanded to include a power source for electric vehicles, and the lithium ion batteries are attracting attention as a next-generation energy storage medium.

Vehicles are rapidly converging with various information and communication technologies, and are continuously changing from existing hardware-based electronic apparatuses to software-oriented apparatuses. As a result, recent vehicles include a number of electronic control units (ECUs) dedicated to specific functions within the vehicle, various sensors, cameras, radars, lidar devices, etc., and require software code associated therewith. Accordingly, vehicle platforms are evolving toward software defined vehicles (SDVs) in which features and functionalities of the vehicle are mainly implemented through software.

With the development of software defined vehicles (SDVs), research is being conducted on technologies that reduce the complexity of circuit structures in vehicles and improve the efficiency of resources required for power control.

### DISCLOSURE OF THE INVENTION

### TECHNICAL PROBLEM

Embodiments disclosed in this document provide a power control device that improves stability of the power control device through redundancy of a data line, and a method thereof.

Embodiments disclosed in this document provide a power control device that improves stability of the power control device through redundancy of a power transmission line, and a method thereof.

Embodiments disclosed in this document provide a power control device that reduce resources required for power control by performing power control through a power control unit, and a method thereof.

Embodiments disclosed in this document provide a power control device that reduce complexity of a circuit of the power control device by performing power control through a power control unit, and a method thereof.

The technical problems of the embodiments disclosed in this document are not limited to the technical problems mentioned above, and other technical problems that are not mentioned may be clearly understood by those skilled in the art from the descriptions below.

### TECHNICAL SOLUTION

A power control device according to an embodiment of this document includes a power control unit electrically connected to a battery and related to power supply, at least one area control unit electrically connected to the power control unit, and an end device electrically connected to the electric power control unit.

According to an embodiment, the power control unit is configured to receive first power from the battery, transmit second power that is at least a part of the received first power to at least one of the end device, the at least one area control unit, or any combination thereof, and operate the end device based on the second power.

According to an embodiment, the end device may be electrically connected to the power control unit through a specific area control unit electrically connected to the end device among the at least one area control unit, and may be configured to receive, from the specific area control unit, third power that is at least a part of the second power received by the specific area control unit from the power control unit.

According to an embodiment, the end device may be electrically connected to a specific area control unit that is one of the at least one area control unit, is configured to receive the second power from the power control unit, and is configured to transmit the same data to the power control unit and the specific area control unit.

According to an embodiment, when first data is not transmitted from the end device to the power control unit and the first data is transmitted from the end device to the specific area control unit, the first data transmitted to the specific area control unit may be transmitted to the power control unit through the specific area control unit and, when second data is transmitted from the end device to the power control unit and the second data is not transmitted from the end device to the specific area control unit, the second data transmitted to the power control unit may be transmitted to the specific area control unit through the power control unit.

According to an embodiment, the power control unit may be configured to monitor, based on a designated period, whether an abnormality occurs in a connection state between the power control unit and the end device, and transmit a notification signal related to the abnormality to the specific area control unit when it is determined that the abnormality occurs.

According to an embodiment, the specific area control unit may be configured to control the end device on behalf of the power control unit based on receiving the notification signal.

According to an embodiment, a first power supply path between the power control unit and the battery may be shorter than a second power supply path between the at least one area control unit and the battery.

According to an embodiment, the power control unit may include a converter circuit configured to change a voltage of the first power, a micro-controller unit (MCU), and a power over data line (PoDL) circuit configured to transmit the second power and transmit or receive data, and the MCU may determine power distribution between a first device included in the end device and a second device included in the end device.

According to an embodiment, the at least one area control unit may be electrically connected to at least one vehicle control device which is for operating a vehicle and is included in the end device, and may be configured to control the at least one vehicle control device based on the second power received from the power control unit, or may be configured to transmit the second power to the at least one vehicle control device.

A power control method according to another embodiment of this document includes an operation of supplying, from a battery, first power to a power control unit electrically connected to the battery and related to power supply, an operation of transmitting, to at least one of an end device electrically connected to the power control unit, at least one area control unit electrically connected to the power control unit, or any combination thereof, second power that is at least a part of the received first power from the power control unit, and an operation of operating the end device based on the second power.

According to an embodiment, the power control method may further include an operation of transmitting, from the power control unit, the second power to a specific area control unit electrically connected to the end device among the at least one area control unit, and an operation of transmitting, from the specific area control unit, to an end device electrically connected to the power control unit through the specific area control unit, third power that is at least a part of the second power received by the specific area control unit.

According to an embodiment, the power control method may further include an operation of transmitting, from the power control unit, the second power to a specific area control unit electrically connected to the end device among the at least one area control unit, an operation of transmitting, from the specific area control unit, the second power to the end device, and an operation of transmitting the same data from the end device to the power control unit and the specific area control unit.

According to an embodiment, the power control method may further include when the first data is not transmitted from the end device to the power control unit and the first data is transmitted from the end device to the specific area control unit, an operation of transmitting the first data transmitted to the specific area control unit to the power control unit from the specific area control unit, and when second data is transmitted from the end device to the power control unit and the second data is not transmitted from the end devices to the specific area control unit, an operation of transmitting the second data transmitted to the power control unit to the specific area control unit from the power control unit.

According to an embodiment, the power control method may further include an operation of monitoring, through the power control unit, whether an abnormality occurs in a connection state between the power control unit and the end device based on a designated period, and an operation of transmitting, through the power control unit, a notification signal related to the abnormality to the specific area control unit when it is determined that the abnormality occurs.

According to an embodiment, the power control method may further include an operation of controlling the end device by the specific area control unit on behalf of the power control unit based on receiving the notification signal through the specific area control unit.

According to an embodiment, a first power supply path between the power control unit and the battery may be shorter than a second power supply path between the at least one area control unit and the battery.

According to an embodiment, the power control unit may include a converter circuit configured to change a voltage of the first power, a micro-controller unit (MCU), and a power over data line (PoDL) circuit configured to transmit the second power and transmit or receive data, and the MCU may be configured to determine power distribution between a first device included in the end device and a second device included in the end device.

According to an embodiment, the power control unit may further include an operation of controlling the at least one vehicle control device based on the second power received from the power control unit or transmitting the second power to the at least one vehicle control device, through the at least one area control unit electrically connected to at least one vehicle control device which is for operating a vehicle and is included in the end device.

### ADVANTAGEOUS EFFECTS

The present technology can improve the stability of the power control device through redundancy of a data line.

In addition, the present technology can improve the stability of the power control device through redundancy of a power transmission line.

In addition, the present technology can reduce resources required for power control by performing power control through the power control unit.

In addition, the present technology can reduce the complexity of the circuit of the power control device by performing power control through the power control unit.

In addition, a variety of effects can be provided that are identified directly or indirectly through this document.

### BRIEF DESCRIPTION OF THE DRAWINGS

FIG. 1 is a conceptual diagram showing a structure of a vehicle including a power control device, in a power control device and method according to an embodiment of this document.
FIG. 2 is a conceptual diagram illustrating another architecture of the vehicle including the power control device, in the power control device and method according to an embodiment of this document.
FIG. 3 is a block diagram showing a configuration of the power control device, in the power control device and method according to an embodiment of this document.
FIG. 4 illustrates a structure of a power control unit, in the power control device and method according to an embodiment of this document.
FIG. 5 illustrates an electrical connection relationship between components of the power control device, in the power control device and method according to an embodiment of this document.
FIG. 6 illustrates an electrical connection relationship between components of a power control device, in a power control device and method according to another embodiment of this document.
FIG. 7 illustrates an electrical connection relationship between components of a power control device, in a power control device and method according to still another embodiment of the present document.
FIG. 8 illustrates an example of a flow of operation of a power control device that transmits power to an end device, in the power control device and method according to an embodiment of this document.
FIG. 9 is a block diagram showing a hardware configuration of a computing system for performing a power control method according to an embodiment of this document.

### MODE FOR CARRYING OUT THE INVENTION

Hereinafter, some embodiments described in this document are described with reference to the accompanying drawings in which various embodiments of this document are illustrated. However, this is not intended to limit the present disclosure to a specific embodiment, but should be understood to include various modifications, equivalents, and/or alternatives of the embodiments of the present disclosure.

It should be noted that, in adding reference numerals to components of each drawing, the same components are given the same reference numerals as much as possible even if they are illustrated in different drawings. In addition, when describing various embodiments disclosed in this document, when it is determined that a specific description of a related known configuration or function hinders an understanding of the embodiments of the present invention, a detailed description thereof will be omitted. The singular form of a noun corresponding to an item may include a single item or multiple items, unless the context clearly indicates otherwise.

In describing the components of the embodiments disclosed in this document, terms such as first, second, A, B, (a), (b), etc. may be used. These terms are only intended to distinguish the components from other components, and the nature, order, or sequence of the components may not be limited by the terms. In addition, unless otherwise defined, all terms used herein, including technical or scientific terms, have the same meaning as generally understood by a person having ordinary skill in the art to which the embodiments disclosed in this document belong. Terms defined in commonly used dictionaries should be interpreted as having a meaning consistent with their meaning in the context of the relevant technology, and shall not be interpreted in an ideal or overly formal sense unless explicitly defined in this application.

In addition, in the present disclosure, in order to determine whether a specific condition is satisfied or fulfilled, expressions of 'exceeding' or 'less than' may be used, but this is merely a description for expressing an example and does not exclude descriptions of 'greater than or equal to' or 'less than or equal to'. Conditions described as 'greater than or equal to' may be replaced with 'exceeding', conditions described as 'less than or equal to' may be replaced with 'less than', and conditions described as 'greater than or equal to and less than' may be replaced with 'exceeding and 'less than or equal to'. In addition, hereinafter, 'A' to 'B' mean at least one of the elements from A (inclusive of A) to B (inclusive of B).

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof.

In this document, when a component (e.g., a first component) is referred to as being "connected", "coupled" or "joined" to another component (e.g., a second component), with or without the terms "functionally" or "communicatively", it means that the component can be connected to the other component directly (e.g., in a wired manner), or wirelessly through a third component.

The method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to various embodiments, each of the components (e.g., modules or programs) described above may include a single or a plurality of entities, and some of the plurality of entities may be separated and placed in other components. According to various embodiments, one or more of the components among the components described above or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

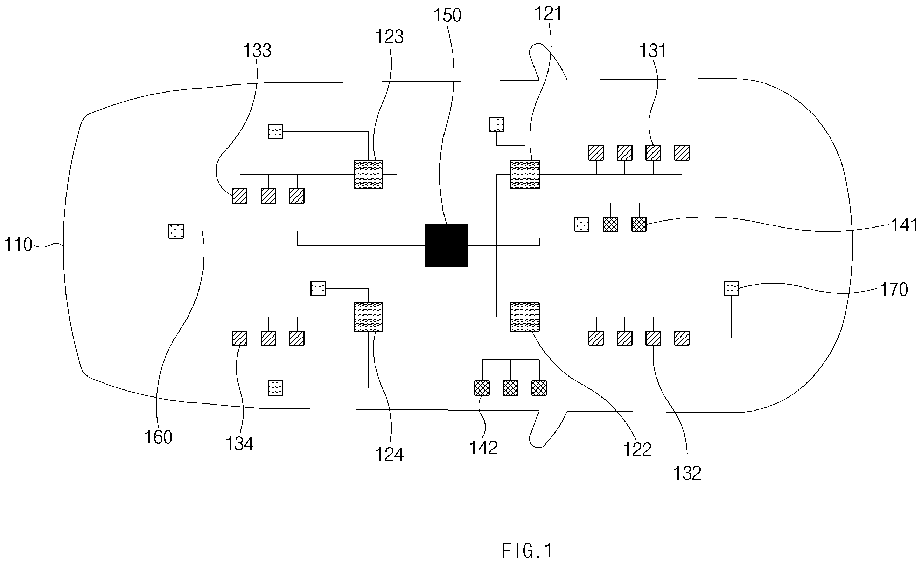

Hereinafter, with reference to FIGS. 1 to 9, embodiments of this document will be described in detail.

FIG. 1 is a conceptual diagram showing a structure of a vehicle including a power control device, in a power control device and method according to an embodiment of this document.

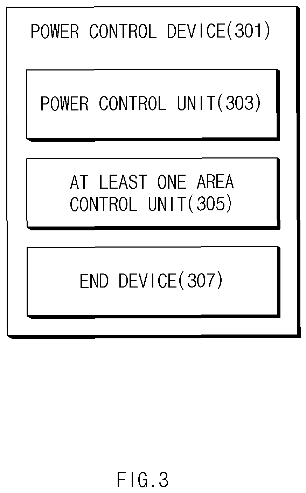

Referring to FIG. 1, a vehicle 110 including a power control device (e.g., a power control device 301 of FIG. 3) may include at least one a first zone controller (e.g., a first area control unit among at least one area control unit 305 of FIG. 3) 121, a second zone controller (e.g., a second area control unit among at least one area control unit 305 of FIG. 3) 122, a third zone controller (e.g., a third area control unit among at least one area control unit 305 of FIG. 3) 123, a fourth zone controller (e.g., a fourth area control unit among at least one area control unit 305 of FIG. 3) 124, a first end device 131 (e.g., an end device 307), a second end device 132 (e.g., the end device 307), a third the end device 133 (e.g., the end device 307), a fourth end device 134 (e.g., the end device 307), a first actuator 141, a second actuator 142, a power control unit 150, a transmission and reception path 160, and an additional element 170, or any combination thereof.

In FIG. 1, the high performance computer (HPC) is not shown, but the HPC may be electrically connected to the power control unit 150.

According to an embodiment, the power control unit 301 may include at least some of the components included in the vehicle 110 according to a software defined vehicle (SDV) architecture.

For example, the power control unit (e.g., the power control unit 303 of FIG. 3) 150 constituting the power control device 301, at least one area control unit (e.g., at least one area control unit 305 of FIG. 3 (e.g., first zone controller 121, second zone controller 122, third zone controller 123, and fourth zone controller 124)), and an end device (e.g., end device 307 of FIG. 3 (e.g., first end device 131, second end device 132, third end device 133, and fourth end device 134)) may be included in components included in the vehicle 110. The end device 307 (e.g., the first end device 131, the second end device 132, the third end device 133, and the fourth end device 134) may include an edge device. The edge device may include a device or system that processes or filters data at the end of the system.

For example, the power control unit 150 may receive first power from a battery, which is one of the components of the vehicle 110.

For example, the power control unit 150 may transmit second power, which is at least a part of the first power, from the power control unit 150 to at least one of the at least one area control unit, the end device 307, or any combination thereof.

According to an embodiment, the at least one area control unit may be electrically connected to at least one vehicle control device which is for operating a vehicle and is included in the end device 307. The at least one area control unit may control at least one vehicle control device based on the second power received from the power control unit 150, or transmit the second power to the at least one vehicle control device.

According to an embodiment, at least one area control unit 305 included in the power control device 301 may include the zone controller (e.g., the first zone controller 121, the second zone controller 122, the third zone controller 123, and the fourth zone controller 124).

For example, the components according to the SDV architecture may include a hierarchical structure of the HPC, the power control unit 150, the zone controller, and the end device in order.

As an example, the power control unit 150 may be electrically connected to the first zone controller 121, the second zone controller 122, the third zone controller 123, and the fourth zone controller 124, and may transmit and receive various types of data to and from each zone controller. The power control unit 150 may be electrically connected to the HPC and may transmit various types of data acquired from each zone controller to the HPC, or receive a control instruction from the HPC, and transmit the control instruction to each zone controller.

As an example, the first zone controller 121 may control the first end device 131, the second zone controller 122 may control the second end device 132, the third zone controller 123 may control the third end device 133, and the fourth zone controller 124 may control the fourth end device 134.

For example, the end device may include at least one vehicle control device for operating the vehicle 110.

As an example, the first zone controller 121 may control the first actuator 141, and the second zone controller 122 may control the second actuator 142. For example, the first actuator 141 and the second actuator 142 may include at least one driving device for driving the vehicle 110.

For example, the components described above may perform communication based on a designated path (e.g., a transmission and reception path 160) through automotive Ethernet.

For example, the HPC, the power control unit, or the zone controller (e.g., the first zone controller 121, the second zone controller 122, the third zone controller 123, and the fourth zone controller 124) may perform communication through automotive Ethernet.

The at least one zone controller 305 of the power control device 301 according to an embodiment may include the zone controller (e.g., the first zone controller 121, the second zone controller 122, the third zone controller 123, and the fourth zone controller 124).

The power control unit 303 of the power control device 301 according to an embodiment may include a battery management system (BMS).

In FIG. 1, the power control device 301 is described as being included in the vehicle 110, but this is only an example, and the embodiments of this document may not be limited thereto. According to an embodiment, the power control device 301 may be included in an electronic apparatus other than a vehicle.

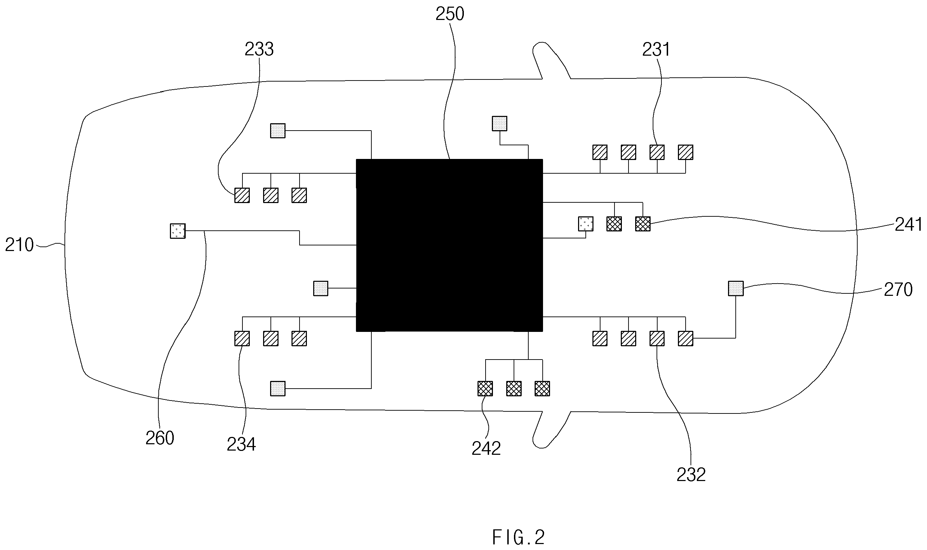

FIG. 2 is a conceptual diagram illustrating another structure of the vehicle including the power control device, in the power control device and method according to an embodiment of this document.

In FIG. 2, descriptions of components defined with the same names as in FIG. 1 may be replaced with the description of those in FIG. 1 described above.

Referring to FIG. 2, a vehicle 210 may include at least one of a first end device 231, a second end device 232, a third end device 233, a fourth end device 234, a first actuator 241, a second actuator 242, a power control unit 250, a transmission/reception path 260, an additional element 270, or any combination thereof.

According to an embodiment, the power control unit 301 may include at least some of the components included in the vehicle 110 according to the software defined vehicle (SDV) architecture.

For example, the vehicle 210 according to FIG. 2 may not include a zone controller when compared with FIG. 1. That is, even if the SDV architecture is adopted, the vehicle 210 may be implemented with a structure in which the power control unit 250 directly controls at least one end device, as in FIG. 2.

The power control unit 303 according to an embodiment may transmit second power to end devices (e.g., the first end device 131, the second end device 132, the third end device 133, and the fourth end device 134).

In FIG. 2, the power control device 301 is described as being included in the vehicle 210, but this is only an example, and the embodiments of this document may not be limited thereto. According to an embodiment, the power control device 301 may be included in an electronic apparatus other than a vehicle.

FIG. 3 is a block diagram showing a configuration of the power control device, in the power control device and method according to an embodiment of this document.

Referring to FIG. 3, the power control device 301 may include the power control unit 303, the at least one area control unit 305, and the end device 307.

According to an embodiment, the power control unit 303 may include a circuit that is connected to a battery and performs operations related to the power of the battery (e.g., circuit protection for overvoltage or overcurrent, power distribution, and power conversion).

According to an embodiment, the at least one area control unit 305 may include a circuit that controls modules (e.g., end devices) allocated according to a designated criterion (e.g., an area where the end device is placed) within the system.

According to an embodiment, the end device 307 includes a device that performs a function of an electronic apparatus (e.g., a vehicle) including the power control device 301. For example, the end device 307 may manage communication between modules, control the electronic apparatus, or perform data processing.

According to an embodiment, power may be required for the end device 307 to operate. The power may be supplied from the battery.

The end device 307 should be electrically connected to a line that supplies power and a line that performs data communication in order to receive power and communicate data.

The structure of the power control device 301 according to an embodiment of this document may reduce the complexity of the overall circuit wiring of the power control device 301 or increase the stability of the power control device 301.

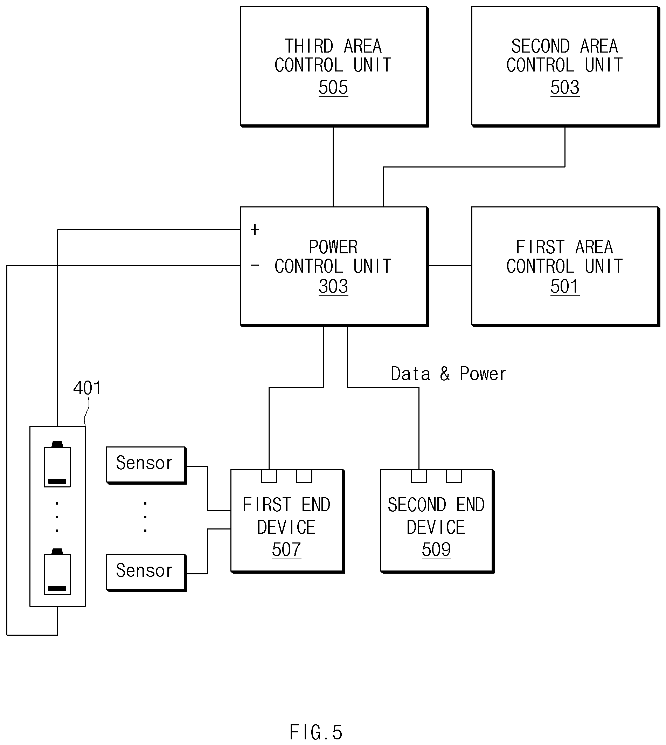

The structure of the power control device 301 according to an embodiment of this document may include three structures. The three structures of the power control device 301 may be described below with reference to FIGS. 5 to 7.

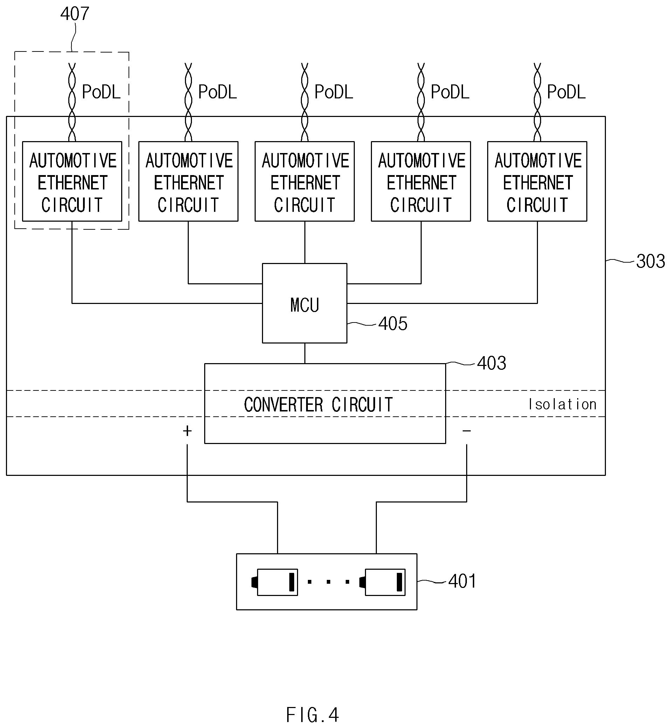

FIG. 4 illustrates a structure of a power control unit, in the power control device and method according to an embodiment of this document.

Referring to FIG. 4, the power control unit 303 may be connected to a battery 401. The power control device 301 may include a converter circuit 403, a micro-controller unit (MCU) 405, and a power over data line (PoDL) circuit 407. The PoDL circuit 407 may include a circuit that transmits power and transmits or receives data. The PoDL circuit 407 may include a PoDL wire connected to an end device (e.g., end device 307 of FIG. 3) or at least one area control unit (e.g., at least one area control unit 305 of FIG. 3), and an automotive Ethernet circuit. The power control unit 303 may include a circuit that is connected to the battery 401 and performs operations related to the power of the battery 401 (e.g., power distribution, power conversion, and circuit protection against overvoltage or overcurrent).

According to an embodiment, the battery 401 may be connected to the converter circuit 403. The converter circuit 403 may change a voltage of first power supplied from the battery 401 to the power control unit 303. For example, the converter circuit 403 may change a first voltage of the first power to a second voltage that is lower than the first voltage.

In addition, based on the converter circuit 403, the power control unit 303 is divided into a first part and a second part, and the first part and the second part may be electrically insulated from each other by an insulating layer so as not to be electrically connected to each other. Only through the converter circuit 403, the first part and the second part may be electrically connected to each other.

According to an embodiment, the converter circuit 403 may transmit the first power having the changed voltage to a micro controller unit (MCU) 405. The MCU 405 may perform operations related to power supply, and transmit a control instruction to the end device 307 or to the battery 401. For example, the MCU 405 may determine power distribution between a first device included in the end device 307 and a second device included in the end device 307. In other words, the MCU 405 may determine power distribution between a plurality of PoDL circuits 407.

FIG. 5 illustrates an electrical connection relationship between components of the power control device, in the power control device and method according to an embodiment of this document.

Referring to FIG. 5, the battery 401 may be electrically connected to the power control unit 303. Since the power control unit 303 performs the role of the area control unit as well as the role of the power control unit 303, the power control unit 303 may be electrically connected to at least one end device (e.g., the first end device 507, the second end device 509) allocated to be managed by the power control unit 303. However, at least one end device allocated to be managed by the first area control unit 501, at least one end device allocated to be managed by the second area control unit 503, and at least one end device allocated to be managed by the third area control unit 505 may be electrically connected to the power control unit 303 via the first area control unit 501.

According to an embodiment, the power control unit 303 and at least one end device (e.g., a first end device 507 and a second end device 509) may be electrically connected to each other via a PoDL circuit (e.g., a PoDL circuit 407 of FIG. 4) that transmits or receives power and transmits or receives data.

According to an embodiment, the power control unit 303 may be electrically connected to at least one area control unit (e.g., the first area control unit 501, the second area control unit 503, and the third area control unit 505). The power control unit 303 and at least one area control unit may be electrically connected connected to each other through the PoDL circuit.

According to an embodiment, the power control unit 303 may receive first power from the battery 401, and transmit second power, which is at least a part of the first power, to at least one end device device (e.g., the first end device 507 and the second end device 509) allocated to be managed by the power control unit 303, through the PoDL circuit. In addition, at least one end device that has received the second power may receive data from the power control unit 303 through the PoDL circuit, or transmit data to the power control unit 303.

According to an embodiment, in order to supply power to at least one end device allocated to be managed by a specific area control unit (e.g., the first area control unit 501, the second area control unit 503, or the third area control unit 505) other than the power control unit 303, the power control unit 303 may receive the first power from the battery 401 and transmit the second power to the specific area control unit.

According to an embodiment, the specific area control unit may transmit third power, which is at least a part of second power, to at least one end device, which is allocated to be managed by the specific area control unit, through the PoDL circuit. The at least one end device that has received the third power may receive data from the specific area control unit or transmit data to the specific area control unit, through the PoDL circuit.

According to an embodiment, a first power supply path between the power control unit 303 and the battery 401 may be shorter than a second power supply path between at least one area control unit and the battery 401. The power control unit 303 may reduce resources required for power control and improve stability of power control by receiving and controlling power before at least one area control unit

According to an embodiment, when power is managed through the power control device 301, resources required for battery management may be less than resources required for battery management when power transmitted to end devices is not integrated and managed.

This is because the power control device 301 integrates and manages power transmitted to end devices through the power control unit 303.

In particular, since the power distributed to each of the area control units may be collectively managed, the efficiency of resource use can be increased when the power transmitted to the end devices is integrated and managed through the power control unit 303 compared to when the power transmitted to the end devices is not integrated and managed.

In addition, according to the embodiment illustrated in FIG. 5, since the power control unit 303 also performs the role of the area control unit, the number of required area control units may be reduced, and accordingly, the circuit complexity of the power control device 301 may be lower than the circuit complexity when the power control unit 303 does not perform the role of the area control unit.

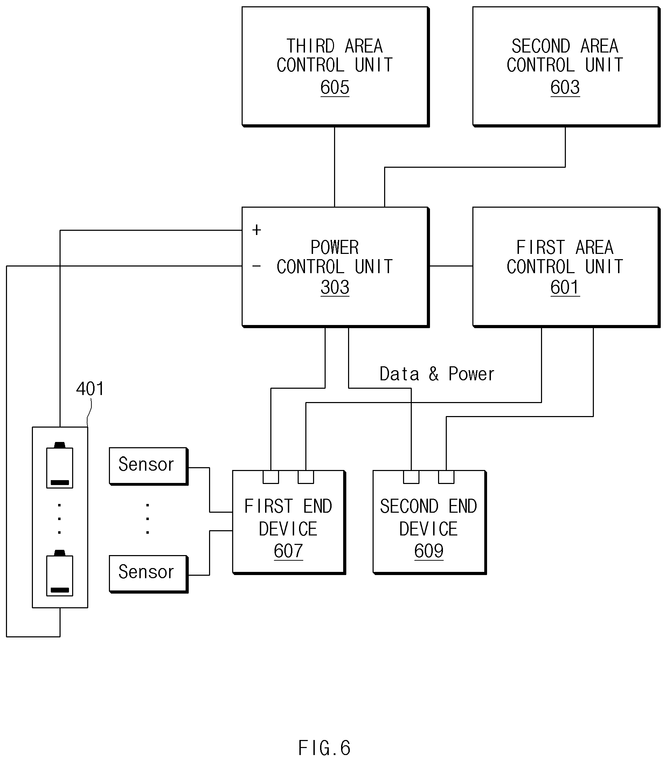

FIG. 6 illustrates an electrical connection relationship between components of a power control device, in a power control device and method according to another embodiment of this document.

Referring to FIG. 6, the battery 401 may be electrically connected to the power control unit 303. The power control unit 303 may be electrically connected to at least one end device (e.g., a first end device 607, a second end device 609) included in the electronic apparatus including the power control device 301 in order to establish a dual data line.

In other words, at least one end device (e.g., the first end device 607 and the second end device 609) electrically connected to a first area control unit 601, at least one end device connected to a second area control unit 603, and at least one end device connected to a third area control unit 605 may be electrically connected to the power control unit 303.

According to an embodiment, the power control unit 303 and the at least one end device (e.g., the first end device 607 and the second end device 609) may be electrically connected to each other through a PoDL circuit (e.g., the PoDL circuit 407 of FIG. 4) that transmits or receives power and transmits or receives data.

According to an embodiment, the power control unit 303 may be electrically connected to at least one area control unit (e.g., the first area control unit 501, the second area control unit 503, and the third area control unit 505). The power control unit 303 and the at least one area control unit may be electrically connected to each other through the PoDL circuit.

According to an embodiment, the power control unit 303 may receive first power from the battery 401, transmit second power, which is at least a part of the first power, to at least one end device included in an electronic device including the power control device 301 through the PoDL circuit, and transmit the second power to each of the at least one area control unit (e.g., the first area control unit 501, the second area control unit 503, and the third area control unit 505) through the PoDL circuit.

At least one end device that has received the second power may transmit the same data to the power control unit 303 and a specific area control unit corresponding to the end device among at least one area control unit through the PoDL circuit. The power control unit 303 may control power supply based on data acquired from at least one end device. The specific area control unit may control the function of at least one end device based on data acquired from at least one end device.

For example, one of the first end device 607 or the second end device 609 that received the second power may transmit data related to a sensing value of the one end device to the power control unit 303 and transmit the same data related to the sensing value to the first area control unit 601 that is electrically connected so that the first end device 607 is managed.

According to an embodiment, the stability of the power control device 301 may be increased by redundancy of the data line.

For example, when first data is not transmitted from an end device to the power control unit 303 and is transmitted from the end device to a specific area control unit, the specific area control unit may transmit the first data transmitted to the specific area control unit to the power control unit. For example, when the second data is transmitted from an end device to the power control unit 303 and is not transmitted from the end device to a specific area control unit, the power control unit 303 may transmit the second data transmitted to the power control unit 303 to the specific area control unit. By making the data line redundant, the power control device 301 may transmit data to the power control unit 303 or at least one area control unit even in a wire fault or loss of communication (LoC) situation.

In addition, according to an embodiment, since power may be transmitted to the end device via at least one area control unit, a backup path for power transmission is secured, so that the stability of the power control unit 301 may be increased.

For example, when the second power is not transmitted from the power control unit 303 to the end device (e.g., the first end device 607 and the second end device 609), the power control unit 303 may transmit power to the end device via a specific area control unit (e.g., the first area control unit 601).

In addition, the power control unit 303 may monitor whether an abnormality occurs in a connection state between the power control unit 303 and the end device based on a specified cycle, and if it is determined that an abnormality occurs, the power control unit 303 may transmit a notification signal regarding the abnormality to the specific area control unit. The specific area control unit may control the end device on behalf of the power control unit based on receiving a notification signal.

According to an embodiment, the first power supply path between the power control unit 303 and the battery 401 may be shorter than the second power supply path between at least one area control unit and the battery 401. The power control unit 303 may reduce resources consumed for power control and improve stability of power control by receiving and controlling power before at least one area control unit.

According to an embodiment, when power is managed through the power control device 301, the resources required for battery management may be less than the resources required for battery management when power transmitted to the end devices is not integrated and managed.

This is because the power control device 301 integrates and manages the power transmitted to the end devices through the power control unit 303.

In particular, since the power distributed to each of the area control units can also be managed collectively, the efficiency of resource use can be increased when the power transmitted to the end devices through the power control unit 303 is integrated and managed compared to when the power transmitted to the end devices is not integrated and managed.

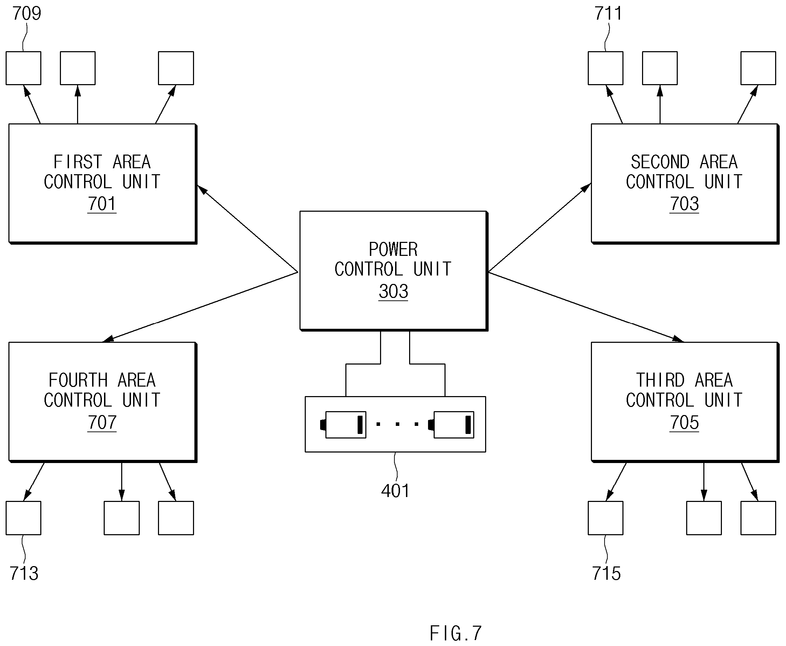

FIG. 7 illustrates an electrical connection relationship between components of a power control device, in a power control device and method according to still another embodiment of the present document.

Referring to FIG. 7, the battery 401 may be electrically connected to the power control unit 303. Although not shown, the power control unit 303 may be electrically connected to the HPC. The power control unit 303 may be electrically connected to at least one area control unit (e.g., the first area control unit 701, the second area control unit 703, the third area control unit 705, and the fourth area control unit 707).

At least one area control unit may be electrically connected to at least one end device allocated to be managed by the at least one area control unit. For example, a first area control unit 701 may be electrically connected to a first end device 709. A second area control unit 703 may be electrically connected to a second end device 711. A third area control unit 705 may be electrically connected to a third end device 715. A fourth area control unit 707 may be electrically connected to a fourth end device 713.

According to an embodiment, the power control unit 303 and at least one area control unit may be electrically connected to each other through a PoDL circuit (e.g., PoDL circuit 407 of FIG. 4) that transmits or receives power and transmits or receives data.

According to an embodiment, the power control unit 303 may receive first power from the battery 401 and transmit second power, which is at least a part of the first power, to at least one area control unit through the PoDL circuit.

According to an embodiment, the at least one area control unit may transmit third power, which is at least a part of the second power, to the end device through the PoDL circuit.

At least one end device that has received the third power may receive data from an area control unit, which is electrically connected to the at least one end device or transmit data to the area control unit, which is electrically connected to the at least one end device, through a PoDL circuit.

When power is managed through the power control device 301, the resources required for battery management may be less than the resources required for battery management when power transmitted to end devices is not integrated and managed.

This is because the power control device 301 integrates and manages power transmitted to end devices through the power control unit 303.

In particular, since power distributed to each of the area control units may also be managed collectively, the efficiency of resource use may increase when power transmitted to end devices is integrated and managed through the power control unit 303 compared to when power transmitted to the end devices is not integrated and managed.

According to an embodiment, although not shown in FIG. 7, data lines or power lines may be made redundant even in the structure of the power control device 301 as shown in FIG. 7.

For example, at least one end device that has received third power may transmit the same data to a management area control unit, which is an area control unit allocated to manage the end device, and a backup area control unit, which is an area control unit allocated to manage the end device on a backup basis, through a PoDL circuit.

For example, when data is not transmitted from an end device (e.g., the first end device 709) to a management area control unit (e.g., the first area control unit 701) and is transmitted to a backup area control unit (e.g., the second area control unit 703), the data transmitted to the backup area control unit may be transmitted to at least one of the management area control unit, the power control unit 303, or a combination thereof through the backup area control unit.

For example, the power control unit 303 may transmit power to the end device (e.g., the first end device 709) through the management area control unit (e.g., first area control unit 701), and when power is not transmitted through the management area control unit, the power control unit 303 may transmit power to the end device through the backup area control unit (e.g., the second area control unit 703).

According to an embodiment, the first power supply path between the power control unit 303 and the battery 401 may be shorter than the second power supply path between at least one area control unit and the battery 401. The power control unit 303 may reduce resources consumed for power control and improve stability of power control by receiving and controlling power before at least one area control unit.

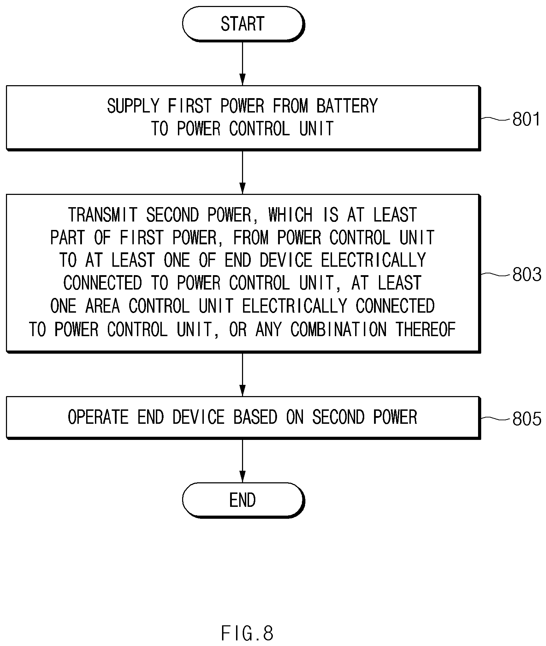

FIG. 8 illustrates an example of a flow of operation of a power control device that transmits power to an end device, in the power control device and method according to an embodiment of this document.

Hereinafter, it is assumed that at least one processor included in the power control device 301 of FIG. 3 performs the process of FIG. 4. In addition, in the description of FIG. 4, the operations described as being performed by the power control device 301 may be understood as being controlled by at least one processor included in the power control device 301.

Referring to FIG. 8, in a first operation 801, the power control device 301 according to an embodiment may supply first power from a battery to the power control unit 303. The power control unit 303 may be electrically connected to the battery and may be related to power supply.

In a second operation 803, the power control device 301 according to an embodiment transmit second power, which is at least a part of the first power, from the power control unit 303 to at least one of the end device 307 electrically connected to the power control unit, at least one area control unit 305 electrically connected to the power control unit 303, or any combination thereof.

In a third operation 805, the power control device 301 according to an embodiment may operate the end device 307 based on the second power.

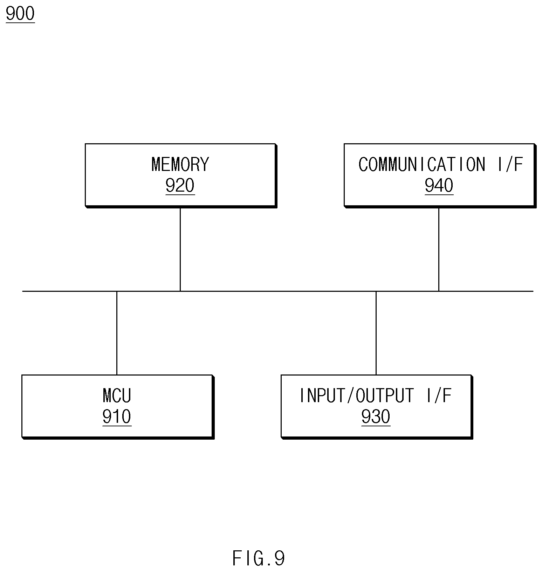

FIG. 9 is a block diagram showing a hardware configuration of a computing system for performing a power control method according to an embodiment of this document.

Referring to FIG. 9, a computing system 900 according to an embodiment disclosed in this document may include an MCU 910, a memory 920, an input/output I/F 930, and a communication I/F 940.

The MCU 910 may be a processor that executes various programs (e.g., battery cell data collection programs, graph generation programs, data analysis programs, data decomposition algorithms, normalization programs, battery cell diagnosis programs, etc.) stored in the memory 220, processes various information including characteristic data, latent variables, etc. of the battery cell through these programs, and performs the functions of the power control device 301 shown in FIGS. 1 to 8 described above.

The memory 920 may store various programs such as the battery cell data collection program, the graph generation program, the data analysis program, the data decomposition algorithm, the normalization program, the battery cell diagnosis program, etc.

A plurality of such memories 920 may be provided as needed. The memory 920 may be a volatile memory or a nonvolatile memory. The memory 920 as the volatile memory may be RAM, DRAM, SRAM, or the like. The memory 920 as the nonvolatile memory may be ROM, PROM, EAROM, EPROM, EEPROM, flash memory, etc. The examples of the memories 920 listed above are only examples and are not limited to these examples.

The input/output I/F 930 may provide an interface that allows data to be transmitted and received between an input device (not shown) such as a keyboard, mouse, or touch panel, and an output device (not shown) such as a display and the MCU 910.

The communication I/F 940 is a configuration that can transmit and receive various data with the server, and may be various devices that can support wired or wireless communication. For example, the electronic device 301 may transmit and receive various information, including a shape model of a battery cell, to and from a separately provided external server through the communication I/F 940.

In this way, the computer program according to an embodiment disclosed in this document may be implemented as a module that performs, for example, each function shown in FIG. 3, by being recorded in the memory 920 and processed by the MCU 910.

In the above, even though all the components constituting the embodiments disclosed in this document have been described as being combined as one or operating in combination, the embodiments disclosed in this document are not necessarily limited to these embodiments. That is, within the scope of the purpose of the embodiments disclosed in this document, all of the components may be selectively combined and operated in combination as one or more.

In addition, the terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The disclosure described above outlines features of several embodiments so that those skilled in the art may better understand the aspects of the present disclosure. Those skilled in the art will understand that the present disclosure may easily be used as a basis for designing or modifying other structures to perform the same purposes or achieve the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

## Claims

1. A power control device comprising:
a power control unit electrically connected to a battery and related to power supply;
at least one area control unit electrically connected to the power control unit; and
an end device electrically connected to the electric power control unit,
wherein the power control unit is configured to:
receive first power from the battery;
transmit second power that is at least a part of the received first power to at least one of the end device, the at least one area control unit, or any combination thereof; and
operate the end device based on the second power.

2. The power control device of claim 1, wherein the end device is electrically connected to the power control unit through a specific area control unit electrically connected to the end device among the at least one area control unit, and is configured to receive, from the specific area control unit, third power that is at least a part of the second power received by the specific area control unit from the power control unit.

3. The power control device of claim 1, wherein the end device is electrically connected to a specific area control unit that is one of the at least one area control unit, is configured to receive the second power from the power control unit, and is configured to transmit the same data to the power control unit and the specific area control unit.

4. The power control device of claim 3, wherein when first data is not transmitted from the end device to the power control unit and the first data is transmitted from the end device to the specific area control unit, the first data transmitted to the specific area control unit is transmitted to the power control unit through the specific area control unit, and
when second data is transmitted from the end device to the power control unit and the second data is not transmitted from the end device to the specific area control unit, the second data transmitted to the power control unit is transmitted to the specific area control unit through the power control unit.

5. The power control device of claim 3, wherein the power control unit is configured to:
monitor, based on a designated period, whether an abnormality occurs in a connection state between the power control unit and the end device; and
transmit a notification signal related to the abnormality to the specific area control unit when it is determined that the abnormality occurs.

6. The power control device of claim 5, wherein the specific area control unit is configured to control the end device on behalf of the power control unit based on receiving the notification signal.

7. The power control device of claim 1, wherein a first power supply path between the power control unit and the battery is shorter than a second power supply path between the at least one area control unit and the battery.

8. The power control device of claim 1, wherein the power control unit includes:
a converter circuit configured to change a voltage of the first power;
a micro-controller unit (MCU); and
a power over data line (PoDL) circuit configured to transmit the second power and transmit or receive data, and
the MCU determines power distribution between a first device included in the end device and a second device included in the end device.

9. The power control device of claim 1, wherein the at least one area control unit is electrically connected to at least one vehicle control device which is for operating a vehicle and is included in in the end device, and is configured to control the at least one vehicle control device based on the second power received from the power control unit, or is configured to transmit the second power to the at least one vehicle control device.

10. A power control method comprising:
an operation of supplying, from a battery, first power to a power control unit electrically connected to the battery and related to power supply;
an operation of transmitting, to at least one of an end device electrically connected to the power control unit, at least one area control unit electrically connected to the power control unit, or any combination thereof, second power that is at least a part of the received first power from the power control unit; and
an operation of operating the end device based on the second power.

11. The power control method of claim 10, further comprising:
an operation of transmitting, from the power control unit, the second power to a specific area control unit electrically connected to the end device among the at least one area control unit; and
an operation of transmitting, from the specific area control unit, to an end device electrically connected to the power control unit through the specific area control unit, third power that is at least a part of the second power received by the specific area control unit.

12. The power control method of claim 10, further comprising:
an operation of transmitting, from the power control unit, the second power to a specific area control unit electrically connected to the end device among the at least one area control unit;
an operation of transmitting, from the specific area control unit, the second power to the end device; and
an operation of transmitting the same data from the end device to the power control unit and the specific area control unit.

13. The power control method of claim 12, further comprising:
when the first data is not transmitted from the end device to the power control unit and the first data is transmitted from the end device to the specific area control unit, an operation of transmitting the first data transmitted to the specific area control unit to the power control unit from the specific area control unit; and
when second data is transmitted from the end device to the power control unit and the second data is not transmitted from the end devices to the specific area control unit, an operation of transmitting the second data transmitted to the power control unit to the specific area control unit from the power control unit.

14. The power control method of claim 12, further comprising:
an operation of monitoring, through the power control unit, whether an abnormality occurs in a connection state between the power control unit and the end device based on a designated period; and
an operation of transmitting, through the power control unit, a notification signal related to the abnormality to the specific area control unit when it is determined that the abnormality occurs.

15. The power control method of claim 14, further comprising:
an operation of controlling he end device by the specific area control unit on behalf of the power control unit based on receiving the notification signal through the specific area control unit.

16. The power control method of claim 10, wherein a first power supply path between the power control unit and the battery is shorter than a second power supply path between the at least one area control unit and the battery.

17. The power control method of claim 10, wherein the power control unit includes:
a converter circuit configured to change a voltage of the first power;
a micro-controller unit (MCU); and
a power over data line (PoDL) circuit configured to transmit the second power and transmit or receive data, and
the MCU is configured to determine power distribution between a first device included in the end device and a second device included in the end device.

18. The power control method of claim 10, further comprising:
an operation of controlling the at least one vehicle control device based on the second power received from the power control unit or transmitting the second power to the at least one vehicle control device, through the at least one area control unit electrically connected to at least one vehicle control device which is for operating a vehicle and is included in the end device.
